(19) Europäisches Patentamt
European Patent Office
Office européen des brevets

(11) **EP 3 589 915 B1**

(12) **EUROPÄISCHE PATENTSCHRIFT**

(45) Veröffentlichungstag und Bekanntmachung des Hinweises auf die Patenterteilung:
**09.08.2023  Patentblatt 2023/32**

(21) Anmeldenummer: **18708955.2**

(22) Anmeldetag: **28.02.2018**

(51) Internationale Patentklassifikation (IPC):
**G01B 11/16** *(2006.01)*     **H02K 7/18** *(2006.01)*
**H02K 11/20** *(2016.01)*

(52) Gemeinsame Patentklassifikation (CPC):
**G01B 11/18; H02K 7/1838; H02K 11/20;**
Y02E 10/72

(86) Internationale Anmeldenummer:
**PCT/EP2018/054859**

(87) Internationale Veröffentlichungsnummer:
**WO 2018/158279 (07.09.2018 Gazette 2018/36)**

(54) **GENERATOR UND VERFAHREN ZUM BETREIBEN EINES GENERATORS**

GENERATOR AND METHOD FOR OPERATING A GENERATOR

GÉNÉRATEUR ET PROCÉDÉ DE FONCTIONNEMENT D'UN GÉNÉRATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2017  DE 102017104329**

(43) Veröffentlichungstag der Anmeldung:
**08.01.2020  Patentblatt 2020/02**

(73) Patentinhaber: **Wobben Properties GmbH**
**26607 Aurich (DE)**

(72) Erfinder: **ROSENBUSCH, Peter**
**92500 Rueil-Malmaison (FR)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2015/002153     DE-A1-102009 003 608
US-A1- 2010 066 315

**Beschreibung**

Die vorliegende Erfindung betrifft einen Generator, insbesondere einer Windenergieanlage, zum Erzeugen elektrischen Stroms, umfassend einen Rotor und einen Stator mit Statorzähnen und dazwischen angeordneten Nuten zum Aufnehmen zumindest einer Statorwicklung. Des Weiteren betrifft die Erfindung ein Verfahren zum Betreiben eines Generators. Weiterhin betrifft die Erfindung eine Windenergieanlage.

Windenergieanlagen sind allgemein bekannt und sie erzeugen elektrischen Strom aus Wind mittels eines Generators. Als Generator soll erfindungsgemäß insbesondere ein Synchrongenerator, vorzugsweise ein Ringgenerator, ein Asynchrongenerator oder ein doppelt gespeister Asynchrongenerator verstanden werden.

US 2010/0066315 A1 offenbart ein System zur Überwachung des Betriebszustands eines Generators zum Erzeugen elektrischen Stroms. Der Generator weist einen Stator mit Statorzähnen und dazwischen angeordneten Nuten auf, in denen Statorwicklungen mit Statorstäben aufgenommen sind. Aufgrund von Vibrationen innerhalb des Generators kommt es zu Biegebewegungen der Statorstäbe, was zu Spannungen in den Statorstäben führt. Eine solche Spannung wird durch eine Dehnungsmessung an einer Oberfläche eines der Statorstäbe erfasst.

WO 2015/002153 offenbart eine Drehmomentschätzvorrichtung für einen Elektromotor, die eine Größe erfasst, die von einer Verformung abhängt, die in Statorzähnen auftritt, wenn der Elektromotor angetrieben wird, wobei die Statorzähne Bestandteile eines Stators sind. Auf der Grundlage der erfassten Größe, die von der Verformung abhängt, die in den Statorzähnen auftritt, schätzt die Drehmomentschätzvorrichtung die Größe des Drehmoments, das von dem Elektromotor erzeugt wird.

DE 10 2011 105 427 A1 betrifft eine elektrische Maschine, umfassend einen Rotor mit einem Wickelkopf; ein Statorblechpaket; einen Luftspalt zwischen Rotor und Stator beziehungsweise Wickelkopf und Stator; eine Überwachungseinrichtung zum Erfassen des Zustandes der den Luftspalt begrenzenden Flächen; die Uberwachungseinrichtung umfasst einen auf den Rotor aufgebrachten Leiter, eine an den Leiter angeschlossene Energiequelle sowie einen Detektor zum Erfassen des Energieflusses im Leiter.

Der aerodynamische Rotor wird bestimmungsgemäß durch Wind in eine Drehbewegung versetzt und treibt dadurch einen elektromechanischen Rotor des Generators an. Es wird somit ein Polrad des Generators relativ zu einem Stator des Generators gedreht. Durch die relative Drehung des Polrades zum Stator wird im Stator elektrischer Strom erzeugt, so dass kinetische Energie des Windes in elektrische Energie gewandelt wird.

Die zwischen einem einzelnen Statorzahn und den sich vorbeibewegenden Rotorpolen auftretende magnetische Wechselwirkung führt zu Magnetkräften. Die magnetische Wechselwirkung ruft eine Kraft auf den Statorzahn hervor, welche zu einer Auslenkung und/oder Verformung des Statorzahns sowie der tragenden Struktur des Generators führt. Diese Auslenkung bzw. Verformung kann hörbare schmalbandige Töne hervorrufen, was als eine zusätzliche Belastung für die Umwelt gewertet wird. Darüber hinaus kann diese periodische Verformung Einfluss auf die Lebensdauer des Generators haben.

Aufgabe der vorliegenden Erfindung ist es somit, wenigstens eins der oben genannten Probleme zu adressieren. Insbesondere soll eine Bestimmung der Auslenkung zumindest eines Statorzahns ohne einen Eingriff in die Geometrie des Generators ermöglicht werden.

Erfindungsgemäß wird ein Generator gemäß Anspruch 1 vorgeschlagen. Dabei kann es sich insbesondere um einen Synchrongenerator, einen Asynchrongenerator oder einen doppelt gespeisten Asynchrongenerator handeln. Ein Beispiel für einen Synchrongenerator, wobei auch andere Generatoren einschließlich anderer Synchrongeneratoren erfindungsgemäß einsetzbar sind, ist ein vielpoliger Synchron-Ringgenerator einer Windenergieanlage. Ein solcher vielpoliger Synchron-Ringgenerator einer Windenergieanlage weist eine Vielzahl von Statorzähnen auf, insbesondere wenigstens 48 Statorzähne, häufig sogar deutlich mehr Statorzähne wie insbesondere 96 Statorzähne oder noch mehr Statorzähne. Der magnetisch aktive Bereich des Synchrongenerators, nämlich sowohl des Rotors, der auch als Läufer bezeichnet werden kann, als auch des Stators, ist in einem ringförmigen Bereich um die Drehachse des Synchrongenerators angeordnet.

Der Stator ist mit Zähnen und dazwischen angeordneten Nuten versehen. Die Nuten nehmen eine Statorwicklung oder mehrere Statorwicklungen auf, so dass die Statorwicklung durch die Nuten und um die Statorzähne angeordnet wird.

Eine Messeinrichtung ist zur Bestimmung der Auslenkung zumindest eines Statorzahns des Stators in Verbindung mit dem Generator vorgesehen, wobei die Messeinrichtung mit zumindest einer Messeinheit verbunden ist, die als Dehnungsmessstreifen ausgeführt und im Luftspalt zwischen Rotor und Stator angeordnet ist. Eine durch die magnetische Wechselwirkung hervorgerufene Verformung des Statorzahns erzeugt ein eine Dehnung repräsentierendes Signal, welches von der Messeinheit an die mit dieser signaltechnisch verbundenen Messeinrichtung weitergeleitet wird. Im Unterschied zur Messung beispielsweise des Drehmoments mittels Beschleunigungssensoren, die an dem aerodynamischen Rotor, in der Regel an dessen Rotorblättern, oder an der Generatorstruktur, also an den im Stahlbau gefertigten Elementen, angeordnet sind, erfolgt die Bestimmung der Auslenkung im Luftspalt des Generators am Ort der Umwandlung von mechanischer in elektrische Energie. Auf diese Weise ist die elektromechanische Energiewandlung direkt messbar.

Ein weiterer Vorteil besteht darin, dass die im Luftspalt angeordnete, als Dehnungsmessstreifen ausgeführte Messeinheit nicht einer Beeinflussung durch, insbesondere mechanische, Schwingungen, die nicht von den Magnetkräften herrühren, unterliegt. Zudem sind Dehnungsmessstreifen platzsparend und kostengünstig. Dies ermöglicht auch eine Nachrüstung bestehender Generatoren mit zumindest einer Messeinheit. Mittels des Dehnungsmessstreifens ist die Bestimmung der Auslenkung eines einzelnen Statorzahns durch die Magnetkräfte, die auf ihn wirken, möglich, ohne den magnetisch aktiven Teil zur Anordnung der zumindest einen Messeinheit in irgendeiner Weise verändern zu müssen.

Hierzu kann die zumindest eine Messeinheit als elektrischer oder optischer Dehnungsmessstreifen ausgeführt sein. Die Verwendung eines optischen Dehnungsmessstreifens hat den Vorteil, dass die von diesem erzeugten Messsignale nicht durch die elektromagnetischen Felder beeinflusst wird. Zudem ist der optische Dehnungsmessstreifen mittels einer optischen Faserleitung signaltechnisch an die Messeinrichtung angebunden. Dies ermöglicht eine bauraumsparende Anordnung der Verkabelung, da durch die Verwendung einer optischen Faserleitung eine Vielzahl von Sensoren verschiedener Basiswellenlängen miteinander verbindbar sind. Zudem kann die Anordnung der Messeinrichtung in großem Abstand zu dem Generator erfolgen. Ein elektrischer Dehnungsmessstreifen hat gegenüber einem optischen Dehnungsmessstreifen in einigen Ausführungsformen den Vorteil einer geringeren Schichtdicke, was beim Einbau im Luftspalt zwischen dem Rotor und dem Stator günstig ist.

Weiterhin kann die Messeinrichtung dazu eingerichtet sein, aus einer Änderung der von der Messeinheit erzeugten Signale eine Auslenkung des Statorzahns zu bestimmen. Die aus den Signalen der Messeinheit durch die Messeinrichtung bestimmte Auslenkung kann zur Ansteuerung und Betriebsüberwachung des Generators herangezogen werden. Insbesondere kann der zeitliche Verlauf der Auslenkung des zumindest einen Statorzahns durch die Messeinrichtung bestimmt werden.

Die Messeinheit ist im Luftspalt zwischen Stator und Rotor sich in tangentialer Richtung erstreckend, zumindest zwei unmittelbar oder mittelbar benachbarte Statorzähne überspannend angeordnet. Die Anordnung erfolgt auf die Rotationsebene des Rotors projiziert in der Rotationsebene des Rotors an zwei unmittelbar oder mittelbar benachbarten Statorzähnen, so dass die tangentiale Auslenkung des Statorzahns erfasst werden kann. Mittelbar benachbarte Statorzähne sind durch zumindest einen zwischen diesen befindlichen Statorzahn zueinander beabstandet. Die unmittelbar benachbarte Statorzähne überspannende Anordnung liefert in der Regel ein höheres Signal-zu-Rausch-Verhältnis. Die Erstreckung der Messeinheit kann dabei in der Rotationsebene liegen oder auch eine Komponente in Axialrichtung umfassen. Durch die Axialkomponente kann zusätzlich zu der tangentialen Auslenkung eine axiale Auslenkung des Statorzahns erfasst werden.

Die als optischer Dehnungsmessstreifen ausgeführte Messeinheit umfasst einen optischen Wellenleiterabschnitt, der vorzugsweise auf durch die Nut zwischen den Statorzähnen zueinander beabstandet angeordneten Trägerelementen angeordnet ist. Bei den Trägerelementen handelt es sich um vorzugsweise plattenförmige Elemente mit geringer Materialstärke. Die Trägerelemente weisen vorzugsweise ein nicht magnetisches und elektrisch nicht leitendes Material auf bzw. bestehen daraus. Dabei sollten die Trägerelemente aus einem relativ steifen Material bestehen. Die Anordnung des jeweiligen Trägerelements erfolgt bevorzugt auf jeweils zueinander benachbarten Statorzähnen, die zumindest durch die Nut beabstandet sind. Es kann auch eine Anordnung der Messeinheit vorgesehen sein, die mittelbar benachbarte Statorzähne, also zwei Statorzähne die durch zumindest einen weiteren Statorzahn voneinander beabstandet sind, überbrückt. Der optische Wellenleiterabschnitt wird mit seinen freien Enden auf dem jeweiligen Trägerelement fixiert. Ein Vorteil der Trägerelemente besteht beispielsweise darin, dass unter anderem aufgrund der Höhe der Trägerelemente eine Beabstandung zum Nutenverschlusskeil beziehungsweise zur Oberfläche der Statorzähne besteht, so dass der optische Wellenleiterabschnitt freischwingend angeordnet ist. Der optische Wellenleiterabschnitt der Messeinheit überspannt zumindest die zwischen den beiden benachbarten Statorzähnen verlaufende Nut. Der optische Wellenleiterabschnitt der Messeinheit kann auch auf der Oberfläche eines der benachbarten Statorzähne angeordnet sein ohne das Benutzen von Trägerelementen.

Vorzugsweise weist der optische Wellenleiterabschnitt wenigstens ein Bragg-Gitter auf. Der Bragg-Gitter aufweisende optische Wellenleiterabschnitt ist im Wesentlichen mittig zwischen den benachbarten Statorzähnen positioniert, deren Auslenkung erfasst werden soll. Die sich zwischen den Statorzähnen befindliche Nut wird im Allgemeinen von einem Nutenverschlusskeil abgedeckt, der etwas hinter die Oberfläche der Statorzähne zurückspringt. Somit kann der Teil des optischen Wellenleiterabschnitts, der die Bragg-Gitter enthält, frei schwingend zwischen den benachbarten Statorzähnen angeordnet sein. Die Bragg-Gitter weisen eine hohe Anzahl von Reflexionsstellen auf, die in einem gleich bleibenden Abstand zueinander in den optischen Wellenleiterabschnitt eingeschrieben sind. Durch die Auslenkung der Statorzähne eingeprägte Dehnungen des optischen Wellenleiterabschnitts verändern den Abstand der Reflexionsstellen. Die Wellenlänge des Lichtes, die von diesen Reflexionsstellen mit konstruktiver Interferenz reflektiert wird, hängt nun vom Abstand dieser Reflexionsstellen ab. Somit ändert sich bei einer Dehnung die Wellenlänge des Reflexionspeaks.

Eine vorteilhafte Weiterbildung der Erfindung sieht vor, dass zumindest zwei Messeinheiten mit optischen Wellenleitabschnitten auf benachbarten Statorzähnen angeordnet sind, die eine um einen Winkel von beispielsweise 45° oder -45° gedrehte Orientierung zu der von diesen überspannten Nut aufweisen. Die Anordnung der zumindest zwei Messeinheiten respektive der jeweiligen Trägerelemente erfolgt dabei in axialer Richtung des Stators versetzt zueinander, was eine Auswertung sowohl eines tangentialen als auch einer axialen Auslenkung der benachbarten Statorzähne ermöglicht. Natürlich sind auch andere Anordnungen der Messeinheiten, insbesondere mit abweichenden Winkeln zueinander und/oder mit mehr als zwei Messeinheiten vorstellbar.

Eine Anordnung der zumindest zwei Messeinheiten mit einer Orientierung von 45° zu der überspannten Nut erfolgt durch eine im Wesentlichen x-förmige Platzierung der Trägerelemente. Dabei überkreuzen sich die optischen Wellenleiterabschnitte der zumindest zwei Messeinheiten.

Eine Anordnung mit einer Orientierung von -45° zur Nut wird durch eine im Wesentlichen v-förmige Anordnung der optischen Wellenleiterabschnitte erzielt. Bei dieser Anordnung berühren oder kreuzen sich die optischen Wellenleiterabschnitte der Messeinheiten nicht.

Die Anordnung zumindest zweier Messeinheiten an zwei benachbarten Statorzähnen mit einer unter einem Winkel zur Nut geneigten Orientierung ermöglicht es, sowohl die tangentiale Auslenkung als auch die axiale Auslenkung zu bestimmen. Dabei ist insbesondere bei dem bevorzugten Winkel zwischen den Wellenleiterabschnitten die Summe der beiden Signale der Messeinheiten ein Maß für die tangentiale Auslenkung und ihre Differenz ein Maß für die axiale Auslenkung des Statorzahns. Andere Winkel erfordern gegebenenfalls trigonometrische Umrechnungen.

Auch kann in bevorzugten Ausgestaltungen eine größere Anzahl von Messeinheiten beispielsweise an verschiedenen Statorzähnen und/oder an beiden Enden der Statorzähne in Axialrichtung vorgesehen sein.

Weiterhin kann die Messeinrichtung dazu eingerichtet sein, ein Drehmoment zu bestimmen.

Der Generator kann als Synchrongenerator, als Asynchrongenerator oder als doppeltgespeister Asynchrongenerator ausgebildet sein. Diesen Bauformen von Generatoren ist gemeinsam, dass sie einen Stator und einen Rotor aufweisen, welche durch einen Luftspalt zueinander beabstandet sind, und dass es aufgrund magnetischer Wechselwirkungen zwischen Rotor und Stator zur Erzeugung von Auslenkungen beispielsweise von Statorzähnen kommen kann, die zu unerwünschten, hörbaren Geräuschen führen.

Weiter wird erfindungsgemäß ein Verfahren zum Betreiben eines Generators, insbesondere einer Windenergieanlage zum Erzeugen elektrischen Stroms, umfassend einen Rotor und einen Stator mit Statorzähnen und dazwischen angeordneten Nuten zum Aufnehmen einer Statorwicklung, gemäß Anspruch 9 vorgeschlagen,

wobei eine zumindest eine als Dehnungsmessstreifen ausgeführte Messeinheit aufweisende Messeinrichtung zur Bestimmung der Auslenkung zumindest eines Statorzahns des Stators in Verbindung mit dem Generator betrieben wird, wobei von der Messeinrichtung die von der Messeinheit erfassten, die Auslenkung zumindest eines Statorzahns repräsentierenden Messwerte ausgewertet werden.

Dabei kann der Generator in Abhängigkeit von der bestimmten Auslenkung zumindest eines der Statorzähne der Erregerstrom des Generators oder der am Generator abgegriffene Strom angesteuert werden. Darüber hinaus können die von der Messeinrichtung bestimmten Auslenkungen zumindest eines Statorzahns, vorzugsweise mehrerer Statorzähne, herangezogen werden, um auf die Lebensdauer des Generators schließen zu können. Weiterhin erlaubt die Bestimmung der Auslenkung Rückschlüsse auf die Homogenität des elektromagnetischen Felds im Luftspalt.

Weitere Ausführungsformen der Erfindung ergeben sich aus den anhand der Zeichnungen näher erläuterten Ausführungsbeispielen. In der Zeichnung zeigt:

Fig. 1  eine Windenergieanlage,

Fig. 2  eine schematische Seitenansicht eines Synchrongenerators,

Fig. 3  eine schematische Teilansicht eines Stators mit einer eine Messeinheit umfassenden Messeinrichtung,

Fig. 4  eine schematische Teilansicht eines Stators mit einer zwei Messeinheiten umfassenden Messeinrichtung,

Fig. 5  eine schematische Teilansicht des Stators mit der Messeinrichtung gemäß Fig. 4 in einer im Wesentlichen v-förmigen Anordnung der beiden Messeinheiten,

Fig. 6  ein Dehnungs-Zeit-Diagramm,

Fig. 7  ein Diagramm eines Verlaufs einer differentiellen Auslenkung benachbarter Statorzähne,

Fig. 8  ein Diagramm eines bestimmten Verlaufs der Auslenkung zweier benachbarter Statorzähne.

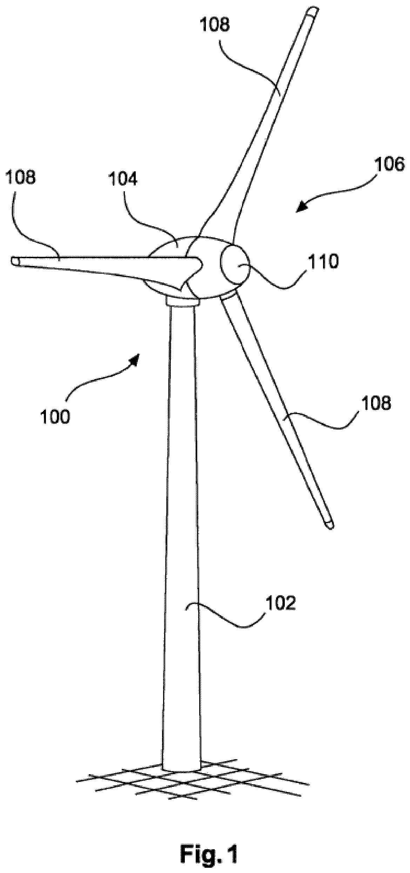

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

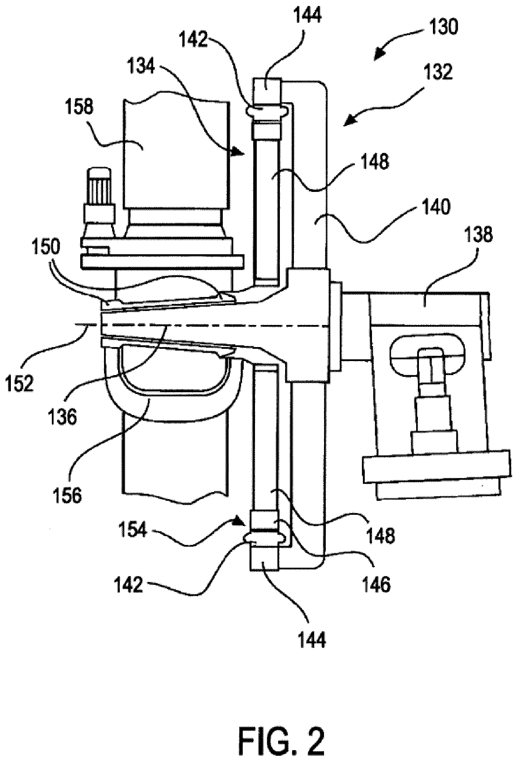

Fig. 2 zeigt einen als Synchrongenerator 130 ausgeführten Generator schematisch in einer Seitenansicht. Er weist einen Stator 132 und einen dazu drehbar gelagerten elektromechanischen Rotor 134 auf und ist mit seinem Stator 132 durch einen Achszapfen 136 an einem Maschinenträger 138 befestigt. Der Stator 132 weist einen Statorträger 140 und als Statorblechpakete ausgeführte Statorzähne 142 auf, die Statorpole des Synchrongenerators 130 bilden und mittels eines Statorrings 144 an dem Statorträger 140 befestigt sind.

Der elektromechanische Rotor 134 weist Rotorpolschuhe 146 auf, die die Rotorpole bilden und durch einen Rotorträger 148 und Lager 150 auf dem Achszapfen 136 drehbar um die Drehachse 152 gelagert sind. Die Statorblechpakete bzw. Statorzähne 142 und Rotorpolschuhe 146 trennt nur ein schmaler Luftspalt 154, der wenige mm dick ist, insbesondere weniger als 6 mm, aber einen Durchmesser von mehreren Metern aufweist, insbesondere mehr als 4 m.

Die Statorzähne 142 und die Rotorpolschuhe 146 bilden jeweils einen Ring und sind zusammen auch ringförmig, so dass der Synchrongenerator 130 ein Ringgenerator ist. Bestimmungsgemäß dreht sich der elektromechanische Rotor 134 des Synchrongenerators 130 zusammen mit der Rotornabe 156 des aerodynamischen Rotors 106, von dem Ansätze von Rotorblättern 158 angedeutet sind.

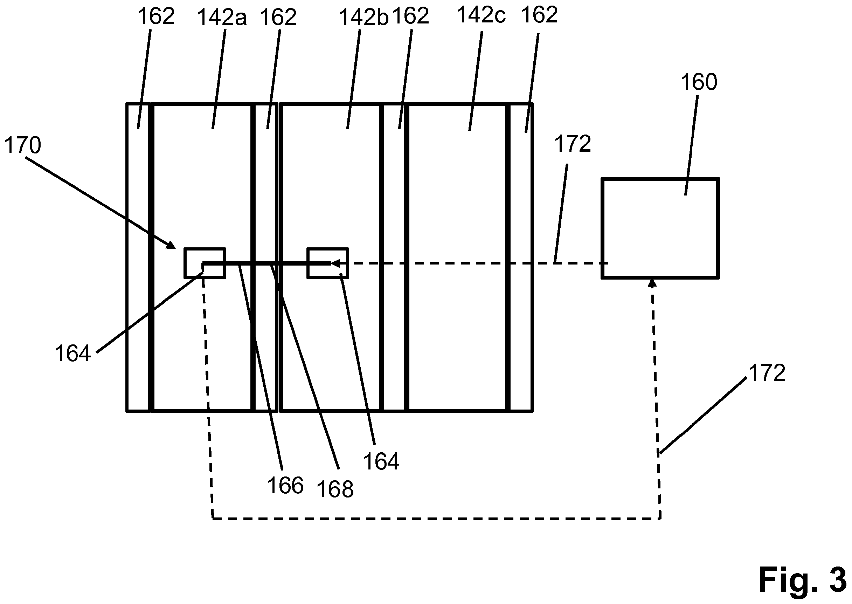

Die Darstellung in Fig. 3 zeigt eine schematische Teilansicht eines Stators 132 mit einer Messeinrichtung 160. Die schematische Teilansicht zeigt einzelne Oberflächenabschnitte von benachbarten Statorzähnen 142a, 142b, 142c des Stators 132, die der Rotationsebene des elektromechanischen Rotors 134 zugewandt sind. Die Statorzähne 142a, 142b, 142c sind jeweils durch eine Nut 162 zueinander beabstandet. Innerhalb dieser Nuten 162 können Wicklungen verlaufen, die um die Statorbleche bzw. Statorzähne 142a, 142b, 142c herum angeordnet sind.

Die Messeinrichtung 160 umfasst zumindest eine Messeinheit 170, welche als ein optischer Dehnungsmessstreifen ausgeführt ist. Die zumindest eine Messeinheit 170 umfasst einen aus Lichtleitfasern bestehenden optischen Wellenleiterabschnitt 166 mit so genannten Bragg-Gittern 168. In die Lichtleitfasern des Wellenleiterabschnitts 166 werden die als optische Interferenzfilter wirkenden Bragg-Gitter 168 eingeschrieben bzw. eingeprägt, die eine Reflexionswellenlänge erzeugen, welche zu einer erfassten Dehnung ε des Wellenleiterabschnitts 166 proportional ist.

Die zumindest eine Messeinheit 170 ist zumindest endseitig auf Trägerelementen 164 angeordnet, die beiderseits der Nut 162 auf den Oberflächen zweier benachbarter Statorzähne 142 angeordnet sind, deren Auslenkung bestimmt werden soll. Dabei wird die Nut 162 von der zumindest einen Messeinheit 170 überspannt. Eine Anordnung der Messeinheit direkt auf der Oberfläche eines Statorzahns und ohne das Vorsehen von Trägerelementen 164 ist ebenfalls denkbar.

Zur besseren Veranschaulichung wird das Paar Statorzähne 142, deren Auslenkung bestimmt werden soll, nachfolgend als vorderer Statorzahn 142a und hinterer Statorzahn 142b bezeichnet. Dabei ist der Statorzahn 142a in Rotationsrichtung des elektromechanischen Rotors 134 gesehen der vordere, der Statorzahn 142b entsprechend als hinterer Statorzahn.

Mittels einer oder mehrerer Signalleitungen 172 steht der Wellenleiterabschnitt 166 der zumindest einen Messeinheit 170 mit der Messeinrichtung 160 signaltechnisch in Verbindung. Alternativ können mehrere Messeinheiten untereinander durch Signalleitungen verbunden werden und diese Kette wird mit mindestens einer Messeinrichtung verbunden. Die Signalleitungen 172 sind als optische Faserleitungen ausgeführt. Die als optische Faserleitungen ausgeführten Signalleitungen 172 haben den Vorteil, dass sich diese durch kompakte Abmessungen auszeichnen, wodurch eine bauraumsparende Anordnung im Synchrongenerator 130, respektive im Luftspalt zwischen dem elektromechanischen Rotor 134 und dem Stator 132, möglich ist. Zudem sind optische Faserleitungen unempfindlich gegenüber elektromagnetischen Feldern, so dass es zu keiner Beeinflussung der Signalübertragung von der zumindest einen Messeinheit 170 zu der Messeinrichtung 160 kommt. Die Anordnung der Messeinrichtung 160 kann in großem Abstand zu der zumindest einen Messeinheit 170 erfolgen. Die zumindest eine als optischer Dehnungsmessstreifen ausgeführte Messeinheit 170 trägt zu einem geringeren Verkabelungsaufwand bei. Innerhalb einer einzigen optischen Faserleitung können mehrere optische Dehnungsmessstreifen integriert werden, indem eine Signalleitung 172 mehrere Messeinheiten 170 verschiedener Basiswellenlängen miteinander verbindet. Damit passt sich auch die optische Messkette den individuellen Anforderungen in der Anwendung in dem Luftspalt zwischen dem elektromechanischen Rotor 134 und Stator 132 des Synchrongenerators 130 an.

Als Trägerelemente 164 werden plattenförmige Elemente auf die Oberflächen der benachbarten Statorzähne 142a, 142b aufgebracht, vorzugsweise verklebt. Die Trägerelemente 164 bestehen aus einem nicht magnetischen und elektrisch nicht leitenden Material. Das für die Trägerelemente 164 verwendete Material sollte dabei eine gewisse Steifigkeit besitzen. Im dargestellten Ausführungsbeispiel bestehen die Trägerelemente 164 aus Glas. Alternativ kann das Trägerelement 164 aus Keramik oder Kunststoff bestehen oder, wie beschrieben, sogar ganz auf Trägerelemente verzichtet werden.

Die zwischen einem einzelnen Statorzahn 142 und den sich vorbeibewegenden Rotorpolen 146 auftretenden Magnetkräfte führen zu einer magnetischen Wechselwirkung zwischen diesen und den Statorzähnen 142. Die magnetische Wechselwirkung ruft eine Auslenkung des jeweiligen Statorzahns 142 hervor, welche zu einer Verformung des Statorzahns 142 führt.

Der mittels der Trägerelemente 164 auf der Oberfläche der benachbarten Statorzähne 142a, 142b aufgebrachte Wellenleiterabschnitt 166 mit in gleichem Abstand eingeprägten Bragg-Gittern 168 erfährt durch diese Verformung eine bestimmbare Dehnung ε. Die Wellenlänge des Lichtes, die von diesen Reflexionsstellen mit konstruktiver Interferenz reflektiert wird, hängt nun vom Abstand dieser Reflexionsstellen ab. Durch die Dehnung ε des Wellenleiterabschnitts 166 in Folge der Verformung des vorderen Statorzahns 142a ändert sich die reflektierte Bragg-Wellenlänge aufgrund einer Abstandsänderung der einzelnen Bragg-Gitter 168. Somit ändert sich bei Auslenkung bzw. Verformung des vorderen Statorzahns 142a die Wellenlänge des Reflexionspeaks.

Die Anordnung des Wellenleiterabschnitts 166 auf den Trägerelementen 164 erfolgt in der Weise, dass sich die Bragg-Gitter 168 im Wesentlichen mittig zwischen dem vorderen Statorzahn 142a und dem hinteren Statorzahn 142b befinden. Da sich zwischen den Statorzähnen 142a, 142b die Nut 162 befindet und ein die jeweilige Nut 162 verschließender Nutenverschlusskeil typischer Weise etwas hinter die Oberfläche der Statorzähne 142 zurückspringt, ist der Teil des Wellenleiterabschnitts 166, der das Bragg-Gitter 168 enthält, frei schwingend. Der Wellenleiterabschnitts 166 ist senkrecht zu dem Verlauf der Nut 162 angeordnet, d.h. in der Rotationsebene des elektromechanischen Rotors 134. Durch diese Anordnung zumindest einer Messeinheit 170 lässt sich die tangentiale Auslenkung der benachbarten Statorzähne 142a, 142b bestimmen.

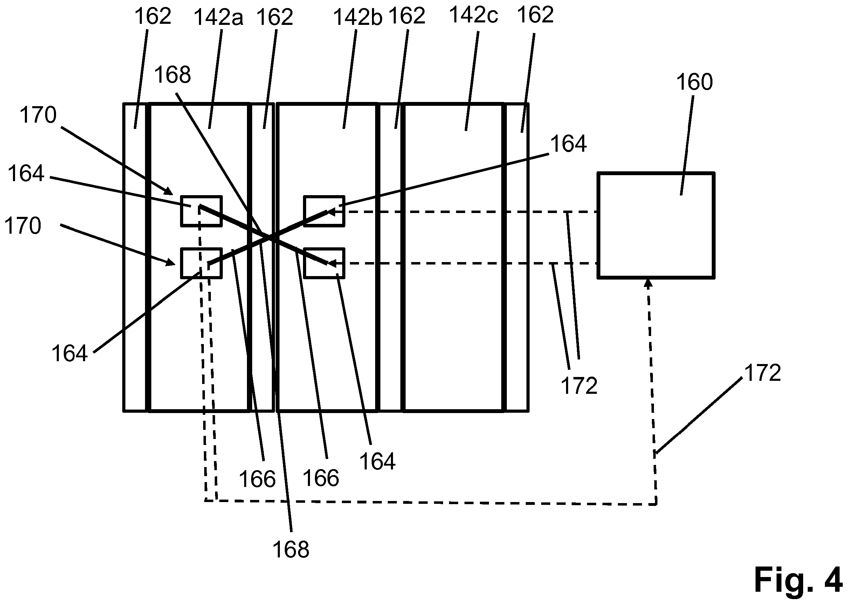

Die Darstellung in Fig. 4 zeigt eine schematische Teilansicht eines Stators 132 mit einer zwei Messeinheiten 170 umfassenden Messeinrichtung 160. Diese Ausführungsform unterscheidet sich von der zuvor beschriebenen Ausführungsform dadurch, dass die Messeinrichtung 160 zwei Messeinheiten 170 umfasst, die im Wesentlichen x-förmig angeordnet sind. Das heißt, der Teil des jeweiligen Wellenleiterabschnitts 166, der das Bragg-Gitter 168 enthält, ist im Bereich der Nut 162 einander überlappend bzw. überkreuzend angeordnet. Hierzu weisen die Wellenleiterabschnitte 166 jeweils eine um einen Winkel von 45° gedrehte Orientierung zu der Nut 162 auf. Die jeweiligen einen Wellenleiterabschnitt 166 aufnehmenden Trägerelemente 164 sind in axialer Richtung des vorderen und hinteren Statorzahns 142a, 142b versetzt zueinander angeordnet. Im Übrigen unterscheidet sich der Aufbau der beiden Messeinheiten 170 nicht von dem der zuvor beschriebenen Messeinheit 170. Mittels dieser Anordnung der Messeinheiten 170 lässt sich simultan eine tangentiale und eine axiale Auslenkung der Statorzähne 142a, 142b bestimmen. Hierzu wird durch die Messeinrichtung 160 aus der Summe der beiden die Dehnung ε der Wellenleiterabschnitte 166 repräsentierenden Signale die tangentiale Auslenkung und aus ihrer Differenz die axiale Auslenkung der Statorzähne 142a, 142b bestimmt. Zur Übertragung sind als optische Faserleitungen ausgeführte Signalleitungen 172 vorgesehen.

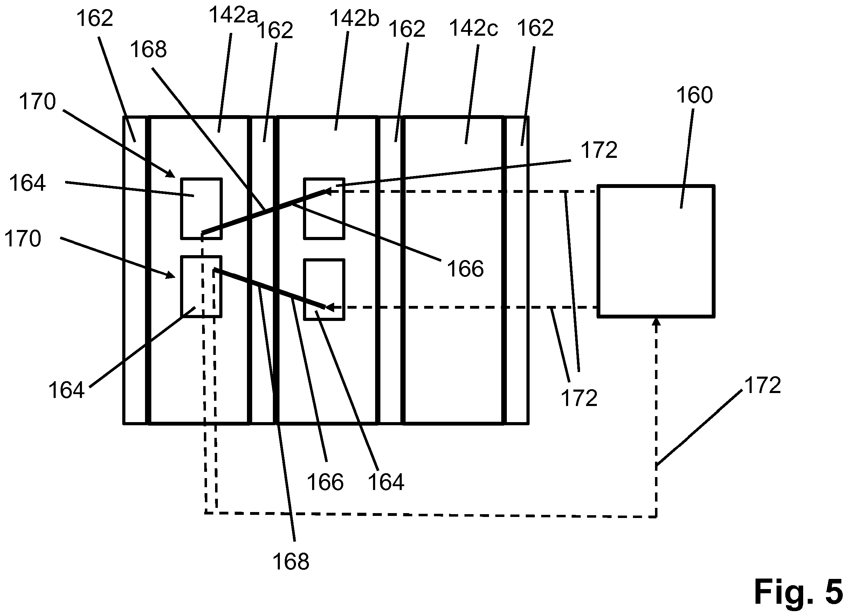

Die Darstellung in Fig. 5 zeigt eine schematische Teilansicht des Stators 132 mit der Messeinrichtung 160 gemäß Fig. 4 in einer im Wesentlichen v-förmigen Anordnung der beiden Messeinheiten 170. Hierzu weisen die Wellenleiterabschnitte 166 jeweils eine um einen Winkel von -45° und 45° gedrehter Orientierung zu der Nut 162 auf. Die Anordnung der beiden Messeinheiten 170 erfolgt dabei berührungslos und überlappungsfrei. Wie zuvor bereits beschrieben, befindet sich die Teile des jeweiligen Wellenleiterabschnitts 166, in dem sich die Bragg-Gitter 168 befinden, im Wesentlichen mittig zwischen den Statorzähnen 142a, 142b.

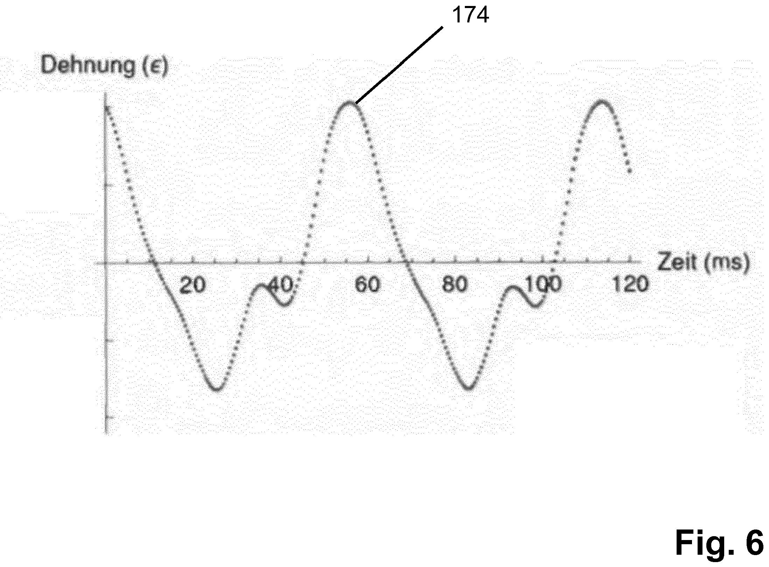

In Fig. 6 ist ein Dehnungs-Zeit-Diagramm dargestellt, welches den zeitlichen Verlauf 174 der mittels der Messeinheit 170 erfassten Dehnung ε des Wellenleiterabschnitts 166 wiedergibt. Die Auswertung der von der Messeinrichtung 160 erfassten Signale liefert als Ergebnis die Dehnung ε der Messeinheit 170, d.h. des Wellenleiterabschnitts 166, als Funktion der Zeit.

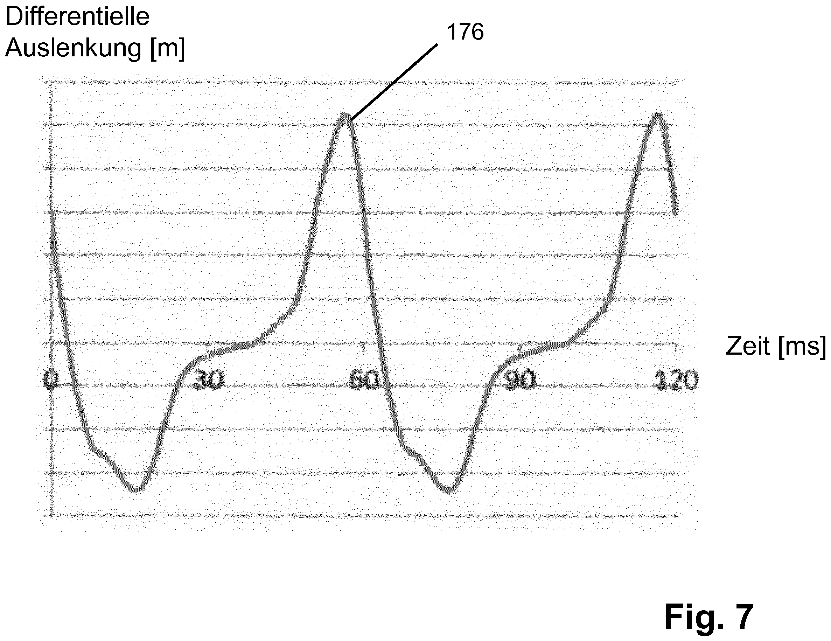

Dieses Ergebnis wird mittels der Messeinrichtung 160 in eine differentielle Auslenkung der benachbarten Statorzähne 142 umgerechnet. Hierzu wird die freie Länge des Wellenleiterabschnitts 166 zwischen den benachbarten Statorzähnen 142a, 142b bestimmt. Hierbei können zur Kalibrierung die Abmessungen der jeweiligen Statorzähne 142a, 142b und der Nut 162 herangezogen werden. Aus dem Produkt aus Dehnung ε und der freien Länge des Wellenleiterabschnitts 166 ergibt sich die differentielle Auslenkung 174 der benachbarten Statorzähne 142a, 142b, die durch die Messeinheit 170 erfasst wird. Die Darstellung in Fig. 7 zeigt ein Diagramm eines Verlaufs 176 einer differentiellen Auslenkung der benachbarten Statorzähne 142a, 142b.

Um die Auslenkung eines einzelnen Statorzahns 142a, 142b zu bestimmen, wird vorausgesetzt, dass die Auslenkung jedes Statorzahns 142a, 142b in der Amplitude identisch ist, jedoch zeitversetzt zueinander. Dieser zeitliche Versatz $\Delta t$ in Sekunden lässt aus der Drehzahl n in Umdrehungen pro Minute des elektromechanischen Rotors 134 während der Messung und der Anzahl N der Statorzähne 142 anhand der nachstehenden Formel berechnen.

$$\Delta t = 60\ /\ (n*N).$$

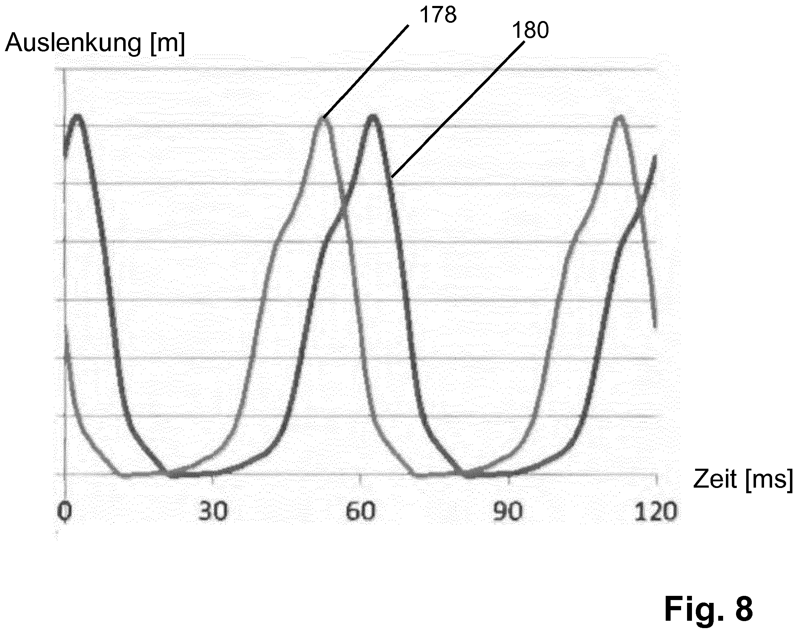

Fig. 8 zeigt eine Darstellung eines Diagramms von gemäß vorstehender Formel bestimmten Verläufen 178, 180 der Auslenkung der benachbarten Statorzähne 142 a und 142b. Der Verlauf 178 gibt die Auslenkung des in Rotationsrichtung des elektromechanischen Rotors 134 vorderen Statorzahns 142a wieder, während der Verlauf 180 die Auslenkung des in Rotationsrichtung des elektromechanischen Rotors 134 hinteren Statorzahns 142b wiedergibt.

Zum Betreiben des Synchrongenerators 130 wird dieser von der Messeinrichtung 160 angesteuert. Hierzu werden von der Messeinrichtung 160 die von der zumindest einen Messeinheit 170 erfassten, die Auslenkung zumindest eines Statorzahns 142 repräsentierenden Messwerte ausgewertet. In Abhängigkeit von der bestimmten Auslenkung zumindest eines Statorzahns 142 wird der Erregerstrom des Synchrongenerators 130 oder der am Synchrongenerator 130 abgegriffene Strom angesteuert. Auf diese Weise lässt sich das Auftreten von Oberschwingungen infolge der Auslenkung der Statorzähne, hervorgerufen durch die Auslenkung der Statorzähne 142, beeinflussen, um die Geräuschentwicklung zu reduzieren.

Darüber hinaus können die von der Messeinrichtung 160 bestimmten Auslenkungen zumindest eines Statorzahns 142 herangezogen werden, um auf den Betriebszustand und die Lebensdauer des Synchrongenerators 130 schließen zu können.

**Patentansprüche**

1. Generator (130) insbesondere einer Windenergieanlage (100), zum Erzeugen elektrischen Stroms, umfassend einen Rotor (134), einen Stator (132) mit Statorzähnen (142, 142a, 142b) und dazwischen angeordneten Nuten (162) zum Aufnehmen zumindest einer Statorwicklung, und eine Messeinrichtung (160) zur Bestimmung der Auslenkung zumindest eines Statorzahns (142a) des Stators (132) in Verbindung mit dem Generator (130), wobei die Messeinrichtung (160) mit wenigstens einer Messeinheit (170) verbunden ist, die als Dehnungsmessstreifen ausgeführt ist, **dadurch gekennzeichnet, dass** die Messeinheit (170) im Luftspalt zwischen Stator (132) und Rotor (134) sich in tangentialer Richtung erstreckend zwei unmittelbar oder mittelbar benachbarte Statorzähne (142a, 142b) überspannend angeordnet ist.

2. Generator (130) nach Anspruch 1, **dadurch gekennzeichnet, dass** die Messeinheit (170) als elektrischer oder optischer Dehnungsmessstreifen ausgeführt ist.

3. Generator (130) nach Anspruch 1 oder 2, **dadurch gekennzeichnet, dass** die Messeinrichtung (160) dazu eingerichtet ist, aus einer Änderung der von der Messeinheit (170) erzeugten Signale eine Auslenkung des Statorzahns (142a) zu bestimmen.

4. Generator (130) nach einem der Ansprüche 1 bis 3, **dadurch gekennzeichnet, dass** die Messeinheit (170) einen optischen Wellenleiterabschnitt (166) umfasst, der auf durch die Nut (162) zwischen den Statorzähnen (142a, 142b) zueinander beabstandet angeordneten Trägerelementen (164) angeordnet ist.

5. Generator (130) nach Anspruch 4, **dadurch gekennzeichnet, dass** der Bragg-Gitter (168) aufweisende optische Wellenleiterabschnitt (166) im Wesentlichen mittig zwischen den unmittelbar oder mittelbar benachbarten Statorzähnen (142a, 142b) positioniert ist.

6. Generator (130) nach einem der Ansprüche 4 oder 5, **dadurch gekennzeichnet, dass** zumindest zwei optische Wellenleiterabschnitte (166) mittels Trägerelementen (164) auf benachbarten Statorzähnen (142a, 142b) angeordnet sind, die bezüglich der Nut eine unterschiedliche Orientierung aufweisen, insbesondere eine um 45° oder -45° gedrehte Orientierung zu der Nut aufweisen.

7. Generator (130) nach einem der Ansprüche 1 bis 6, **dadurch gekennzeichnet, dass** die Messeinrichtung (160) dazu eingerichtet ist, ein Drehmoment des Generators zu bestimmen.

8. Generator (130) nach einem der Ansprüche 1 bis 7, **dadurch gekennzeichnet, dass** der Generator als Synchrongenerator, als Asynchrongenerator oder als doppeltgespeister Asynchrongenerator ausgebildet ist.

9. Verfahren zum Betreiben eines Generators (130), insbesondere einer Windenergieanlage (101), zum Erzeugen elektrischen Stroms, umfassend einen Rotor (134) und einen Stator (132) mit Statorzähnen (142, 142a) und dazwischen angeordneten Nuten (162) zum Aufnehmen einer Statorwicklung, **dadurch gekennzeichnet, dass** eine wenigstens eine als Dehnungsmessstreifen ausgeführte Messeinheit (170) aufweisende Messeinrichtung (160) zur Bestimmung der Auslenkung zumindest eines Statorzahns (142a) des Stators (132) in Verbindung mit dem Generator (130) betrieben wird, wobei von der Messeinrichtung (160) die von der Messeinheit (170) erfassten, die Auslenkung zumindest eines Statorzahns (142a) repräsentierenden Messwerte ausgewertet werden, wobei die Messeinheit (170) im Luftspalt zwischen Stator (132) und Rotor (134) sich in tangentialer Richtung erstreckend zwei unmittelbar oder mittelbar benachbarte Statorzähne (142a, 142b) überspannend angeordnet ist.

10. Verfahren nach Anspruch 9, **dadurch gekennzeichnet, dass** in Abhängigkeit von der bestimmten Auslenkung des zumindest einen Statorzahns (142a) ein Erregerstrom des Generators (130) angesteuert wird.

**11.** Windenergieanlage (101) mit einem Generator (130) nach einem der Ansprüche 1 bis 8, wobei der Generator (130) nach dem Verfahren gemäß Anspruch 9 oder 10 betreibbar ist.

**Claims**

**1.** A generator (130), in particular of a wind power installation (100), for generating electric current, comprising a rotor (134) and a stator (132) having stator teeth (142, 142a, 142b) and grooves (162) arranged between said stator teeth for receiving at least one stator winding and a measuring device (160) to determine the deflection of at least one stator tooth (142a) of the stator (132) in connection with the generator (130), wherein the measuring device (160) is connected to at least one measuring unit (170), which is embodied as a strain gauge, **characterized in that** the measuring unit (170) is arranged in the air gap between the stator (132) and the rotor (134) so as to span two directly or indirectly adjacent stator teeth (142a, 142b) and to extend in the tangential direction.

**2.** The generator (130) as claimed in claim 1, **characterized in that** the measuring unit (170) is embodied as an electrical or optical strain gauge.

**3.** The generator (130) as claimed in claim 1 or 2, **characterized in that** the measuring device (160) is configured to determine a deflection of the stator tooth (142a) from a change in the signals generated by the measuring unit (170).

**4.** The generator (130) as claimed in one of claims 1 to 3, **characterized in that** the measuring unit (170) comprises an optical waveguide section (166), which is arranged on support elements (164) arranged at a distance from one another by way of the groove (162) between the stator teeth (142a, 142b).

**5.** The generator (130) as claimed in claim 4, **characterized in that** the optical waveguide section (166) having Bragg gratings (168) is positioned substantially centrally between the directly or indirectly adjacent stator teeth (142a, 142b).

**6.** The generator (130) as claimed in either of claims 4 or 5, **characterized in that** at least two optical waveguide sections (166) are arranged on adjacent stator teeth (142a, 142b) by means of support elements (164), said stator teeth having a different orientation with respect to the groove, in particular an orientation rotated by 45° or -45° with respect to the groove.

**7.** The generator (130) as claimed in one of claims 1 to 6, **characterized in that** the measuring device (160) is configured to determine a torque of the generator.

**8.** The generator (130) as claimed in one of claims 1 to 7, **characterized in that** the generator is in the form of a synchronous generator, an asynchronous generator or a doubly-fed asynchronous generator.

**9.** A method for operating a generator (130), in particular of a wind power installation (101), for generating electric current, comprising a rotor (134) and a stator (132) having stator teeth (142, 142a) and grooves (162) arranged between said stator teeth for receiving a stator winding, **characterized in that** a measuring device (160) having at least one measuring unit (170) embodied as a strain gauge is operated to determine the deflection of at least one stator tooth (142a) of the stator (132) in connection with the generator (130), wherein the measurement values representing the deflection of at least one stator tooth (142a) that are recorded by the measuring unit (170) are evaluated by the measuring device (160) wherein the measuring unit (170) is arranged in the air gap between the stator (132) and the rotor (134) so as to span two directly or indirectly adjacent stator teeth (142a, 142b) and to extend in the tangential direction.

**10.** The method as claimed in claim 9, **characterized in that** a field current of the generator (130) is actuated depending on the determined deflection of the at least one stator tooth (142a).

**11.** A wind power installation (101) having a generator (130) as claimed in one of claims 1 to 8, wherein the generator (130) can be operated according to the method as claimed in claim 9 or 10.

**Revendications**

**1.** Générateur (130) en particulier d'une éolienne (100) pour générer du courant électrique, comprenant un rotor (134), un stator (132) avec des dents de stator (142, 142a, 142b) et des rainures (162) disposées de manière intercalée pour recevoir au moins un enroulement de stator, et un système de mesure (160) pour définir la déviation d'au moins une dent de stator (142a) du stator (132) en lien avec le générateur (130), dans lequel le système de mesure (160) est relié à au moins une unité de mesure (170), qui est réalisée en tant que jauge de contrainte, **caractérisé en ce que** l'unité de mesure (170) est disposée de manière à surmonter deux dents de stator (142a, 142b) directement ou indirectement adjacentes tout en s'étendant dans la direction tangentielle dans l'entrefer entre le stator (132) et le rotor (134).

**2.** Générateur (130) selon la revendication 1, **caractérisé en ce que** l'unité de mesure (170) est réalisée en tant que jauge de contrainte électrique ou optique.

**3.** Générateur (130) selon la revendication 1 ou 2, **caractérisé en ce que** le système de mesure (160) est mis au point pour définir une déviation de la dent de stator (142a) à partir d'une modification des signaux générés par l'unité de mesure (170).

**4.** Générateur (130) selon l'une quelconque des revendications 1 à 3, **caractérisé en ce que** l'unité de mesure (170) comprend une section de guide d'ondes optique (166), qui est disposée sur des éléments de support (164) disposés de manière espacée les uns par rapport aux autres à travers la rainure (162) entre les dents de stator (142a, 142b).

**5.** Générateur (130) selon la revendication 4, **caractérisé en ce que** la section de guide d'ondes optique (166) présentant le réseau de Bragg (168) est positionnée sensiblement au centre entre les dents de stator (142a, 142b) directement ou indirectement adjacentes.

**6.** Générateur (130) selon l'une quelconque des revendications 4 ou 5, **caractérisé en ce qu'**au moins deux sections de guide d'ondes optiques (166) sont disposées sur des dents de stator (142a, 142b) adjacentes au moyen d'éléments de support (164), qui présentent par rapport à la rainure une orientation différente, en particulier une orientation par rapport à la rainure tournée de 45° ou de -45°.

**7.** Générateur (130) selon l'une quelconque des revendications 1 à 6, **caractérisé en ce que** le système de mesure (160) est mis au point pour définir un couple de rotation du générateur.

**8.** Générateur (130) selon l'une quelconque des revendications 1 à 7, **caractérisé en ce que** le générateur est réalisé en tant que générateur synchrone, en tant que générateur asynchrone ou en tant que générateur asynchrone à double injection.

**9.** Procédé pour faire fonctionner un générateur (130), en particulier une éolienne (101), pour produire un courant électrique, comprenant un rotor (134) et un stator (132) avec des dents de stator (142, 142a) et des rainures (162) disposées de manière intercalée pour recevoir un enroulement de stator, **caractérisé en ce qu'**un système de mesure (160) présentant au moins une unité de mesure (170) réalisée en tant que jauge de contrainte fonctionne pour définir la déviation d'au moins une dent de stator (142a) du stator (132) en lien avec le générateur (130), dans lequel les valeurs de mesure détectées par l'unité de mesure (170), représentant la déviation d'au moins une dent de stator (142a) sont évaluées par le système de mesure (160), dans lequel l'unité de mesure (170) est disposée de manière à surmonter deux dents de stator (142a, 142b) directement ou indirectement adjacentes s'étendant dans la direction tangentielle dans l'entrefer entre le stator (132) et le rotor (134).

**10.** Procédé selon la revendication 9, **caractérisé en ce qu'**un courant d'excitation du générateur (130) est piloté en fonction de la déviation définie de l'au moins une dent de stator (142a).

**11.** Eolienne (101) avec un générateur (130) selon l'une quelconque des revendications 1 à 8, dans laquelle le générateur (130) peut fonctionner selon le procédé selon la revendication 9 ou 10.

**Fig. 1**

FIG. 2

Fig. 3

Fig. 4

EP 3 589 915 B1

Fig. 5

Fig. 6

EP 3 589 915 B1

Fig. 7

Fig. 8

EP 3 589 915 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100066315 A1
- WO 2015002153 A

- DE 102011105427 A1